# EUROPEAN PATENT SPECIFICATION

(11) **EP 1 622 723 B1**
(45) Date of publication and mention of the grant of the patent: **22.05.2013**
(21) Application number: 04726244.9
(22) Date of filing: 07.04.2004
(51) Int. Cl.: B01J 19/28, F26B 11/02, F26B 11/04

(54) **Apparatus for treating waste material**
Vorrichtung zur Behandlung von Abfallmaterial
Appareil de traitement des dechets

(30) Priority: 07.04.2003 IE 20030260
(43) Date of publication of application: 08.02.2006
(73) Proprietor: Fossey, Robin Ernest, Redhills, County Cavan (IE); Collins, Brian Donald, Chalfont-St-Giles, Buckinghamshire HP8 4BJ (GB)
(72) Inventor: Fossey, Robin Ernest, Redhills, County Cavan (IE); Collins, Brian Donald, Chalfont-St-Giles, Buckinghamshire HP8 4BJ (GB)
(74) Representative: Gorman, Francis Fergus
(86) International application number: PCT/IE2004/000052
(87) International publication number: WO 2004/089547

(56) References cited:
- DE-C- 4 235 428
- US-A- 3 196 938
- US-A- 5 427 650
- US-A- 5 655 718
- US-B1- 6 203 765
- PATENT ABSTRACTS OF JAPAN vol. 1997, no. 09, 30 September 1997 (1997-09-30) & JP 9 126427 A (MOTODA ELECTRON CO LTD), 16 May 1997 (1997-05-16)

## Description

The present invention relates to apparatus for treating waste material.

Apparatus for treating waste material is know. For example, U.S. Patent Specification No. 5,655,718 or US3196938 A1 disclose such apparatus, and a method for treating waste material in the apparatus. The apparatuses disclosed in These documents comprise an elongated cylindrical vessel for receiving waste material at one end thereof through an open mouth. The vessel defines a longitudirially extending central axis, and the vessel is rotatably carried in a carrier framework about its longitudinal central axis. In US 5655718 the carrier framework is pivotally supported on a ground engaging mounting about a horizontal pivot axis extending transversely relative to the longitudinal central axis of the vessel. The carrier framework, and in turn the vessel, are pivotal about the horizontal pivot axis between a loading position for loading the vessel with the vessel extending downwardly from the open mouth, and the longitudinal central axis of the vessel inclined to the horizontal, through an intermediate operating position for treating the waste material with the longitudinal central axis of the vessel extending horizontally, and a discharge position for discharging the treated waste with the vessel extending downwardly towards the open mouth, and the longitudinal central axis of the vessel inclined to the horizontal. A drive motor mounted on the carrier framework drives a pinion which co-operates with an arcuate rack mounted on the ground engaging mounting for pivoting the carrier framework between the loading and the discharge positions through the operating position.

A chain drive transmission from another drive motor is provided for rotating the vessel about the longitudinal central axis within the carrier framework during treatment of the waste material therein. A closure lid is provided for closing the open mouth of the vessel. The closure lid is releasably carried on a pivot arm, so that when the vessel is to be loaded or unloaded, the pivot arm is pivotal into engagement with the closure lid. Thus, when the closure lid is released from the vessel the closure lid is supported on the pivot arm, and can be urged away from the vessel on the pivot arm. However, during operation the closure lid must be disengaged from the pivot arm to allow the closure lid to rotate with the vessel.

The apparatus of U.S. Patent Specification No. 5,655,718 suffers from a large number of disadvantages, and in particular, economical disadvantages, and may also be unsafe. Firstly, the closure lid must be secured to the vessel after the vessel has been loaded with waste material, and prior to the vessel being pivoted from the loading position, otherwise, the waste material loaded into the vessel will spill from the vessel. This requires manual securing of the lid to the vessel, which is a relatively complicated and dangerous task, particularly since it has to be carried out at a relatively high level since in the loading position the vessel extends downwardly from the open mouth. A second disadvantage of the apparatus of U.S. Patent Specification No. 5,655,718 is that the drive arrangement for slewing the vessel and the carrier framework between the loading and discharge positions through the operable position tends to be relatively dangerous, since due to the fact that a pinion driven by a drive motor is engageable with an arcuate rack, it is possible for an operator to become impaled on the rack and pinion drive. A further disadvantage of the apparatus of U.S. Patent Specification No. 5,655,718 relates to the drive mechanism for rotating the vessel. Since the drive mechanism includes a chain drive transmission, an operator can readily easily become impaled in the drive mechanism with serious consequences, which may be fatal. A still further disadvantage of the apparatus of U.S. Patent Specification No. 5,655,718 is that should the drive motor for slewing the apparatus about the pivot axis between the loading and discharge positions fail, the carrier framework and the vessel can suddenly slew downwardly from the loading to the discharge position with consequential serious problems, which could lead to a fatal accident of an operator standing beneath the apparatus.

Accordingly, there is a need for apparatus for treating waste material which overcomes the problems of the apparatus of U.S. Patent Specification No. 5,655,718, and other such known apparatus, as for example from US 3196938 A1.

The present invention is directed towards providing such an apparatus.

According to the invention there is provided apparatus for treating waste material, the apparatus comprising a carrier framework, an elongated vessel defining a hollow interior region for the waste material, the vessel defining a longitudinally extending vessel axis, and being rotatably carried in the carrier framework about the vessel axis, an open mouth being provided to the hollow interior region of the vessel for accommodating waste material to and from the hollow interior region, and a closure means for closing the open mouth, the closure means being operable between a closed state closing the open mouth, and an open state providing access to the hollow interior region through the open mouth for loading and discharging waste material to and from the hollow interior region, wherein a communicating duct in continuous communication with the hollow interior region defines the open mouth to the hollow interior region, the communicating duct being rigidly coupled to the carrier framework, and sealably engaging the vessel for facilitating rotation of the vessel relative to the communicating duct, the closure means is coupled to the carrier framework and is pivotal relative to the carrier framework about a pivot axis, and an urging means is provided for urging the closure means between the open state and the closed state.

In one embodiment of the invention the communicating duct defines a longitudinally extending duct axis, which coincides with the longitudinal vessel axis.

Preferably, the longitudinal vessel axis about which the vessel is rotatable is the longitudinal geometrical central axis of the vessel.

Advantageously, the pivot axis about which the closure means is pivotal between the closed and the open state extends transversely relative to the longitudinal vessel axis. Ideally, the pivot axis about which the closure means is pivotal between the closed and the open states extends substantially horizontally.

In one embodiment of the invention the vessel is rotatably carried in the carrier framework on at least one rotary bearing. Preferably, the vessel is rotatably carried in the carrier framework on a pair of spaced apart rotary bearings.

In one embodiment of the invention each rotary bearing comprises a stationary ring which is rigidly coupled to the carrier framework, and a rotatable member rigidly coupled to the vessel and rotatable therewith relative to the stationary ring.

In another embodiment of the invention the rotatable member of at least one of the rotary bearings comprises a rotatable ring.

In a further embodiment of the invention the communicating duct extends from the stationary ring of one of the rotary bearings.

In one embodiment of the invention a heat exchange medium accommodating passageway is associated with the vessel for controlling the temperature of the hollow interior region thereof, and a communicating means extending through at least one of the rotary bearings communicates the heat exchange medium accommodating passageway with a head exchange medium source for providing heat exchange medium to the heat exchange medium accommodating passageway.

In another embodiment of the invention the communicating means extends through one of the rotary bearings, and the communicating means delivers flow heat exchange medium to the heat exchange medium accommodating passageway from the heat exchange medium source, and returns heat exchange medium from the heat exchange medium accommodating passageway to the heat exchange medium source.

In one embodiment of the invention the communicating means comprises a pair of mutually sealed galleries provided in one of the rotary bearings, one of the galleries being a flow gallery for accommodating the flow heat exchange medium for delivery to the heat exchange medium accommodating passageway, and the other of the galleries being a return gallery for accommodating return heat exchange medium delivered from the heat exchange medium accommodating passageway. Preferably, the flow and return galleries are defined by the stationary ring and rotatable member of the rotary bearing. Advantageously, a plurality of heat exchange medium accommodating passageways are provided associated with the vessel, and the flow gallery forms a flow manifold for delivering the flow heat exchange medium to the respective heat exchange medium accommodating passageways, and the return gallery forms a return manifold for receiving the return heat exchange medium from the heat exchange medium accommodating passageways.

Preferably, a flow inlet is provided to the flow gallery for accommodating the flow heat exchange medium to the flow gallery, and a return outlet is provided from the return gallery for returning return heat exchange medium therefrom.

In one embodiment of the invention the rotary bearing through which the communicating means extends for accommodating the heat exchange medium to each heat exchange medium accommodating passageway is the rotary bearing from which the communicating duct extends.

In a further embodiment of the invention the rotary bearing through which the communicating means extends is the rotary bearing from which the communicating duct does not extend.

In one embodiment of the invention each heat exchange medium accommodating passageway extends substantially longitudinally relative to the vessel axis. Preferably, each heat exchange medium accommodating passageway comprises an elongated flow leg extending from the communicating means in the corresponding rotary bearing for receiving the flow heat exchange medium, and an elongated return leg extending from the communicating means of the corresponding rotary bearing for returning the return heat exchange medium to the communicating means. Advantageously, the flow and return legs of each heat exchange medium accommodating passageway communicate at their ends opposite to the ends which communicate with the communicating means of the corresponding rotary bearing.

In one embodiment of the invention each heat exchange medium accommodating passageway is located on the external surface of the vessel.

In another embodiment of the invention the closure means comprises a closure lid. Preferably, a securing means is provided for securing the closure means to the communicating duct for retaining the closure means in the closed state. Advantageously, the securing means comprises a plurality of spaced apart latches co-operating between the communicating duct and the closure means for securing the closure means in the closed state.

In one embodiment of the invention each latch is operable between a latched state securing the closure means in the closed state and an unlatched state for permitting pivoting of the closure means from the closed state to the open state. Preferably, an actuating means is provided for urging the latches between the latched and the unlatched states. Advantageously, one actuating means is provided for each latch. Preferably, each latch is pivotally coupled to the communicating duct.

In one embodiment of the invention the closure means is pivotally coupled to the framework by a pivot shaft which defines the pivot axis about which the closure means is pivotal, the pivot shaft being carried on a pivot mounting bracket extending from the communicating duct, and a carrier bracket extending from the pivot shaft carrying the closure means and pivotally engaging the pivot shaft.

Preferably, the urging means for urging the closure means between the closed and the open states comprises an urging ram operably coupled between the closure means and the carrier framework.

In another embodiment of the invention a ground engaging support means is provided for pivotally supporting the carrier framework about a substantially horizontal slew axis extending transversely relative to the longitudinal vessel axis, the carrier framework and the vessel being slewable about the slew axis between a loading position and a discharge position.

Preferably, the carrier framework and the vessel are slewable between the loading and discharge positions through an operable position intermediate the loading and the discharge positions.

In one embodiment of the invention a slewing means is provided for slewing the carrier framework and the vessel about the slew axis between the loading and the discharge positions. Preferably, the slewing means comprises at least one slewing ram operably coupled between the support means and the carrier framework.

Advantageously, the pivot axis about which the closure means is pivoted is located above the open mouth when the carrier framework is in the discharge position.

In one embodiment of the invention a drive means is provided for rotating the vessel about the longitudinally extending central axis within the carrier framework for agitating the waste material located in the hollow interior region of the vessel. Preferably, the drive means comprises a drive motor. Advantageously, the drive means is mounted on the carrier framework, and a drive transmission shaft extending from the drive means operably engages the vessel for rotation thereof. Ideally, the drive transmission shaft extends parallel to the longitudinal vessel axis. Preferably, the drive transmission shaft defines a rotational axis which coincides with the longitudinal vessel axis.

The advantages of the invention are many. Firstly, the closure means can be pivotally carried on the carrier framework or on the communicating duct, and thus is pivotal relative to the carrier framework between the open and closed state. Thus, the closure means can be pivoted between the closed and open state by a suitable urging means operably connected between the closure means and the carrier framework. This, thus, permits the closure means to be remotely operated between the open and closed states, without the need to have an operator manually manhandle the closure means between the open and closed states. Additionally, by virtue of the fact that the closure means is pivotal between the open and closed state, the closure means lends itself ideally to being sealably secured to the communicating duct. The provision of the securing means in the form of latches, and in particular, latches which are operable by actuating means provides a particularly advantageous arrangement for sealably securing the closure means to the communicating duct. By virtue of the fact that the securing means are provided to be remotely actuatable, the need for an operator to be present to manually secure the closure means to the vessel is avoided.

Additionally, by virtue of the fact that the closure means is pivotally coupled to the carrier framework, the pivot axis of the closure means will always be in the same position irrespective of the angular orientation of the vessel about the longitudinally extending central axis. Thus, by providing the pivot axis at a location above the open mouth when the carrier framework and in turn the vessel is in the horizontal operating state, the pivot axis, and in turn the closure means when pivoted into the open state will always be above the open mouth. In other words, the closure means will always pivot in a generally upwardly direction from the open mouth when being pivoted from the closed to the open state. In this way processed waste material being discharged from the vessel when the vessel is in the discharge position will never be obstructed by the closure means, since the closure means will always be above and clear of the open mouth.

Furthermore, the pivotal coupling of the closure means to the carrier framework provides the added advantage that the vessel can be operated to continue to rotate while processed waste material is being discharged therefrom, and also while the closure means is being pivoted between the closed and open states. Similarly, since the closure means remains in a fixed position relative to the communicating duct and the carrier framework when in the open state, the vessel can also be rotated during charging of the vessel with waste material to be processed.

A further advantage of the invention is achieved when the slewing means for slewing the carrier framework relative to the support means is provided by a ram in that the slewing means is a relatively simple and non-complex slewing means, and thus, there is no danger of an operator becoming impaled in the slewing means as the slewing means is being operated for operating the carrier framework between the discharge and loading positions, and vice versa. A further advantage of providing the slewing means in the form of a ram, and in particular, an hydraulic ram, is that there is little or no danger of the carrier framework suddenly pivoting downwardly from the loading position to the discharge position, even in the event of a failure of the hydraulic system, since the hydraulic rams will lower the carrier framework slowly downwardly in the event of failure of the hydraulic system.

A further advantage of the invention is achieved when the vessel is rotated within the carrier framework directly by a drive motor located in the rear end framework. The provision of a direct drive avoids the need for providing chain drive or other such indirect drive transmission, thereby avoiding any danger of an operator being impaled in such a drive transmission.

Another advantage of the invention is achieved by providing one of the rotary bearings with a communicating means for communicating the heat exchange medium accommodating passageways with a heat exchange medium source. The provision of the communicating means in one of the rotary bearings permits the passageways to be supplied with heat exchange medium while the vessel is rotating.

The invention will be more clearly understood from the following description of some preferred embodiments thereof, which are given by way of example only, with reference to the accompanying drawings, in which:
Fig. 1 is a side elevational view of apparatus according to the invention for treating waste material,
Fig. 2 is an end elevational view of the apparatus of Fig. 1,
Fig. 3 is a partly cross-sectional enlarged side elevational view of a portion of the apparatus of Fig. 1,
Fig. 4 is a side elevational view of a detail of the apparatus of Fig. 1,
Fig. 5 is an end elevational view of the portion of Fig. 4 of the apparatus of Fig. 1,
Fig. 6 is another end elevational view of the portion of Fig. 4,
Fig. 7 is a side elevational view of another portion of the apparatus of Fig. 1,
Fig. 8 is a transverse cross-sectional side elevational view of a detail of the portion of Fig. 3 of the apparatus of Fig. 1,
Fig. 9 is a side elevational view of another portion of the apparatus of Fig. 1,
Fig. 10 is another side elevational view of the portion of Fig. 9 of the apparatus of Fig. 1,
Fig. 11 is an end elevational view of the portion of Fig. 9 of the apparatus of Fig. 1,
Fig. 12 is a side elevational view of a portion of apparatus according to another embodiment of the invention for treating waste material,
Fig. 13 is an end view of the portion of the apparatus of Fig. 12,
Fig. 14 is a transverse cross-sectional side elevational view of a detail of the apparatus of Fig. 12,
Fig. 15 is a transverse cross-sectional side elevational view of another detail of the apparatus of Fig. 12,
Fig. 16 is an end view of the detail of Fig. 15,
Fig. 17 is a transverse cross-sectional side elevational view of a detail of apparatus according to a further embodiment of the invention, and
Fig. 18 is an end view of the detail of Fig. 17.

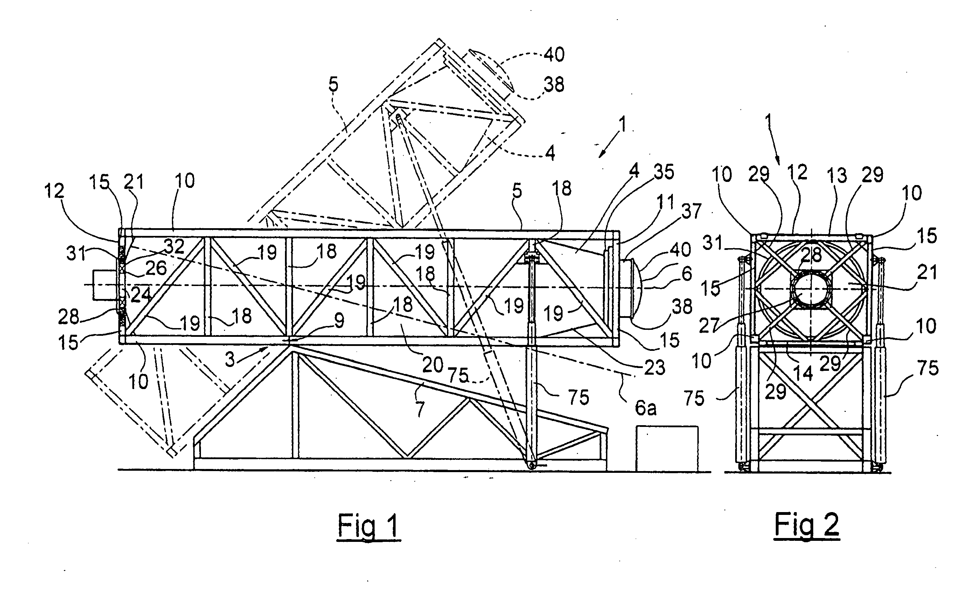

Referring to the drawings and initially to Figs. 1 to 11 thereof, there is illustrated apparatus according to the invention, indicated generally by the reference numeral 1, for treating waste material. The apparatus 1 comprises an elongated cylindrical vessel 4 of steel defining a longitudinally extending geometrical central axis 6, which is rotatably carried in a carrier framework 5, and is rotatable in the carrier framework 5 about the central axis 6, as will be described below. The vessel 4 defines a hollow interior region 8 within which the waste material is treated. The carrier framework 5 is pivotally carried at 3 on a ground engaging support means, namely, a ground engaging support framework 7, about a horizontal slew axis 9, and is slewable about the slew axis 9 between a loading position illustrated in broken lines in Fig. 1 for loading of the vessel 4 with waste material, through an operating position illustrated in full lines in Fig. 1 during which waste material is processed in the vessel 4, and a discharge position (not shown) but explained below for discharging treated waste material from the vessel 4.

The carrier framework 5 is of steel of lattice construction, and comprising four longitudinally extending elongated side members 10, which extend between a square front end frame 11 and a square rear end frame 12. Each end frame 11 and 12 comprises a transversely extending top cross-member 13 and a transversely extending bottom cross-member 14, which are joined by end members 15. A plurality of spaced apart intermediate reinforcing members 18 extend between adjacent pairs of the side members 10, and inclined reinforcing members 19 extend between adjacent side members 10 and adjacent intermediate reinforcing members 18, which with the intermediate reinforcing members 18 and the side members 10 form the lattice construction of the carrier framework 5.

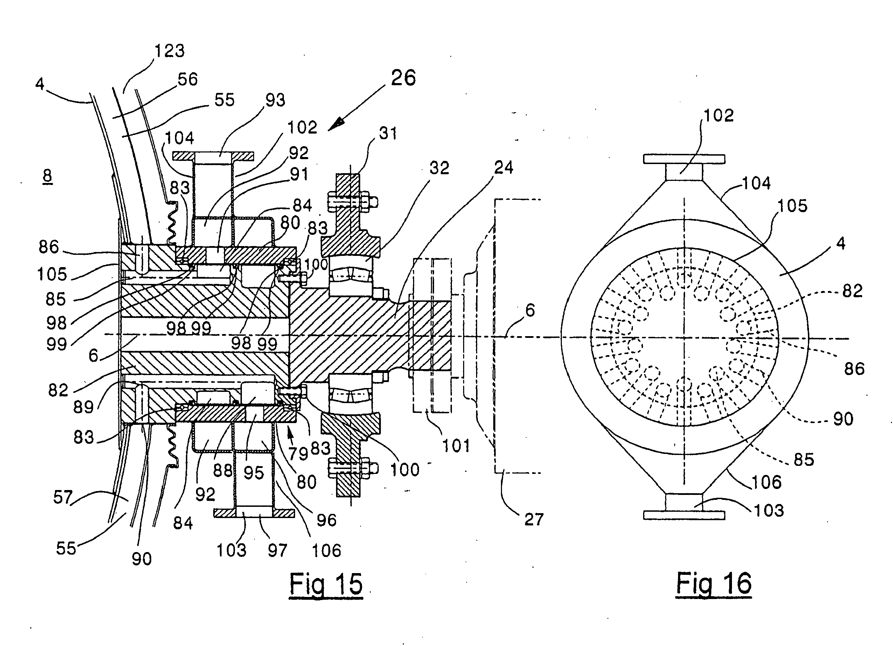

The vessel 4 comprises a central cylindrical portion 20 closed at one end by a convex end cap 21, and terminating in its other end in a frustoconical portion 23. A front end rotary bearing 25 centrally located in the front end frame 11 and a rear end rotary bearing 26 centrally located in the rear end frame 12 rotatably carries the vessel 4 in the carrier framework 5. A drive means provided by a drive motor 27, which is centrally located relative to the rear end frame 12, and which is mounted on the rear end frame 12 by a mounting plate 28 of steel is coupled to the vessel 4 by a drive transmission shaft 24 for rotating the vessel 4 about the longitudinal central axis 6. The mounting plate 28 is centrally located and mounted on the rear end frame 12 by diagonally extending mounting struts 29, which extend between the mounting plate 28 and the corners of the rear end frame 12. The drive transmission shaft 24 is secured to the end cap 21 of the vessel 4, and extends from the drive motor 27 coaxially with the longitudinal central axis 6 of the vessel 4, and is rotatable in the rear end bearing 26, which is carried in a mounting ring flange 31. The mounting ring flange 31 is of steel, and is rigidly secured in the rear end frame 12. In this embodiment of the invention the rear end bearing 26 is provided by a self aligning axial thrust bearing 32, which is located in the mounting ring flange 31. Although the axial thrust bearing 32 of the rear end bearing 26 and the mounting ring flange 31 are illustrated in Fig. 1, and the mounting ring flange 31 is illustrated in Fig. 2, the mounting ring flange 31 and the axial thrust bearing 32 are more clearly illustrated in Fig. 15, which illustrates a portion of apparatus according to another embodiment of the invention.

The front end rotary bearing 25 comprises a stationary ring 30 of steel which is rigidly secured in the front end frame 11 by a pair of radially extending spigots 33 of steel which extend on diametrically opposite sides of the stationary ring 30 for engaging corresponding mounting brackets 34 of steel secured to the end members 15 of the front end frame 11. A rotatable member, namely, a rotatable ring 35 of steel which is rigidly and sealably secured to the frustoconical portion 23 of the vessel 4 is retained in sealable rotatable engagement with the stationary ring 30. A communicating duct 37 of steel is rigidly and sealably secured to the stationary ring 30, and communicates with the hollow interior region 8 of the vessel 4. The communicating duct 37 is welded to and extends forwardly from the stationary ring 30 and terminates in an open mouth 38 for forming an open mouth to the hollow interior region 8, for in turn facilitating loading waste material into the vessel 4 and discharging the processed waste material from the vessel 4. Since the communicating duct 37 is rigidly connected to the stationary ring 30 and the vessel 4 is rigidly connected to the rotatable ring 35, and since the rotatable ring 35 is in sealable engagement with the stationary ring 30, the communicating duct 37 is in continuous sealable engagement with the vessel 4 irrespective of whether the vessel 4 is stationary or rotating within the carrier framework 5.

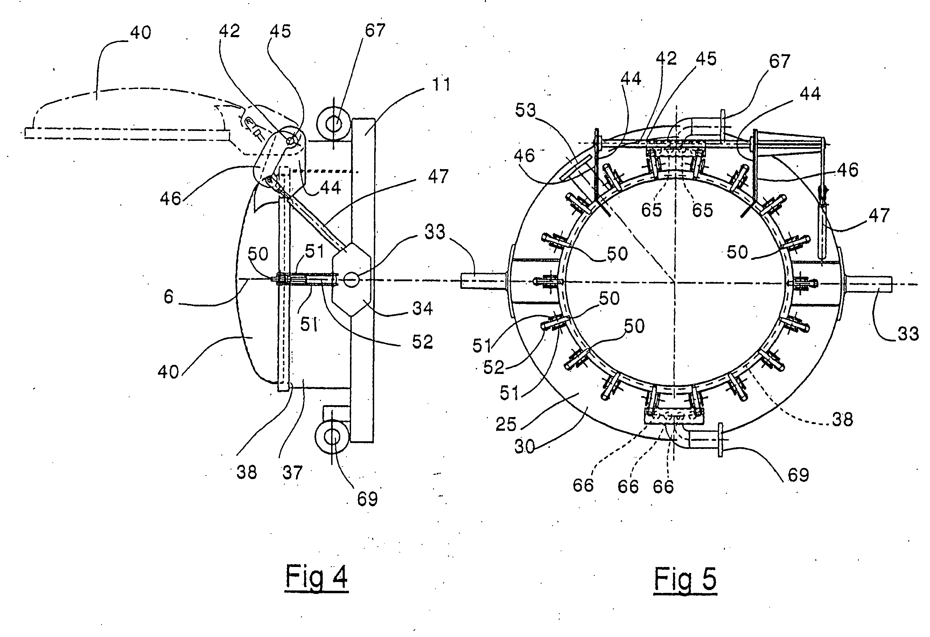

A closure means, namely, a closure lid 40 of steel is pivotally coupled to the communicating duct 37, and is pivotal about a horizontal pivot axis 42, which extends transversely relative to the longitudinal central axis 6, between a closed state illustrated in full lines in Fig. 4 closing the open mouth 38, and an open state illustrated in broken lines in Fig. 4 providing access to the hollow interior region 8 of the vessel 4. A pair of spaced apart pivot mounting brackets 44 of steel welded to the communicating duct 37 rotatably carry a horizontal pivot shaft 45 of steel which defines the pivot axis 42 about which the lid 40 is pivotal. A pair of carrier brackets 46 of steel which are rigidly carried on the pivot shaft 45 carry the lid 40 thereon. An urging means comprising an hydraulically operated urging ram 47 operably connected between the stationary ring 30 and an operating lever 48 of steel, which is rigidly secured to the pivot shaft 45, urges the closure lid 40 between the closed and open states.

A securing means provided by a plurality of latches 50 of steel releasably and sealably secure the closure lid 40 in the closed state to the communicating duct 37. The latches 50 are circumferentially spaced apart around the periphery of the closure lid 40. Each latch 50 is pivotally carried on a pair of latch mounting brackets 51 of steel, which are in turn welded to the communicating duct 37. A plurality of corresponding actuating means, namely, actuating rams 52 operably connected between the latches 50 and the latch mounting brackets 51 pivot the latches 50 between a latched state for latching the closure lid 40 in sealable secure engagement with the communicating duct 37 and an unlatched state for permitting pivoting of the closure lid 40 from the closed state to the open state by the urging ram 47.

A sealing ring (not shown) is located within the closure lid 40 for sealably engaging the closure lid 40 with the communicating duct 37.

A vent outlet 53 extends from the communicating duct 37 for venting the hollow interior region 8 of the vessel 4 during the waste treatment process. A pressure relief valve (not shown) is located in the vent outlet 53 for venting the hollow interior region 8 of the vessel 4 when the pressure therein exceeds a predetermined value. Alternatively, a solenoid operated valve may be located in the vent outlet 53 which would be operable under the control of a control circuit (not shown) in response to a processing cycle of the apparatus, or in response to pressure being monitored in the hollow interior region 8 of the vessel 4 exceeding a predetermined pressure level. Gases and vapours released from the waste material during processing thereof may also be collected from the vent outlet 53 or from another suitable vent for further processing thereof.

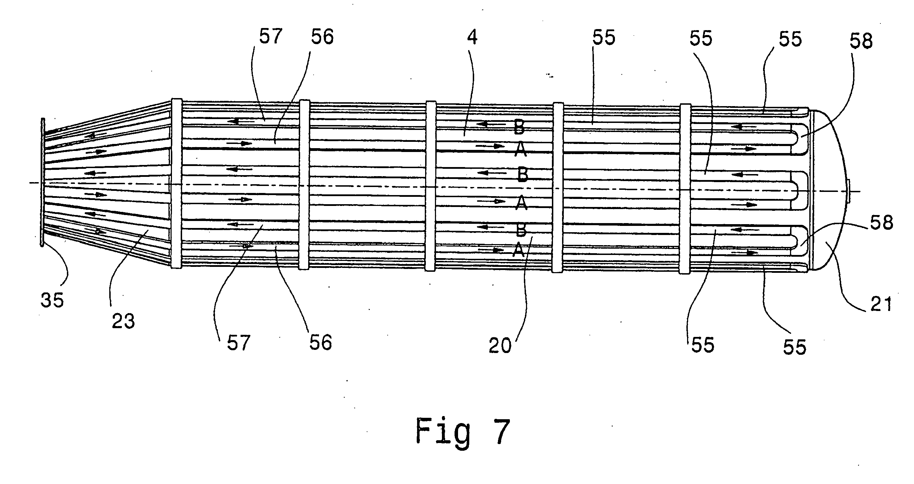

A plurality of heat exchange medium accommodating passageways 55 extend longitudinally along the vessel 4 from the rotatable ring 35 of the front end rotary bearing 25 to a position adjacent the end cap 21, for accommodating a heat exchange medium, typically heated oil for raising the temperature of the waste material in the vessel 4 to a temperature, typically in the order of 120°C. Each passageway 55 comprises a flow leg 56 for accommodating the heat exchange medium in one direction, namely, in the direction of the arrow A from the rotatable ring 35, and a return leg 57 for returning the heat exchange medium in the opposite direction, namely, in the direction of the arrow B to the rotatable ring 35, see Fig. 7. The flow and return legs 56 and 57 of each passageway 55 are connected by a connecting leg 58 adjacent the end cap 21. The passageways 55 are formed by respective elongated members of steel of U-shape construction which are seam welded to the vessel 4, so that each U-shaped member forms with the skin of the vessel 4 a corresponding passageway 55. Since the vessel 4 is of steel, the steel skin of the vessel facilitates heat conduction from the heat exchange medium circulating in the passageways 55 to the hollow interior region 8 of the vessel 4 for heating the contents thereof. Insulation cladding is provided over the entire exterior of the vessel 4 and also over the passageways 55 for minimising heat loss from the vessel 4.

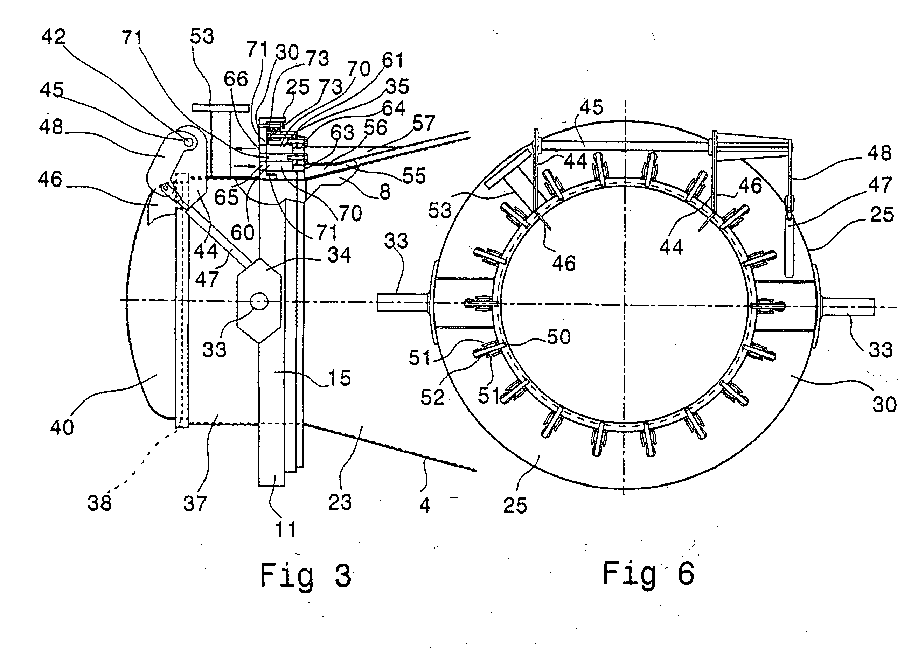

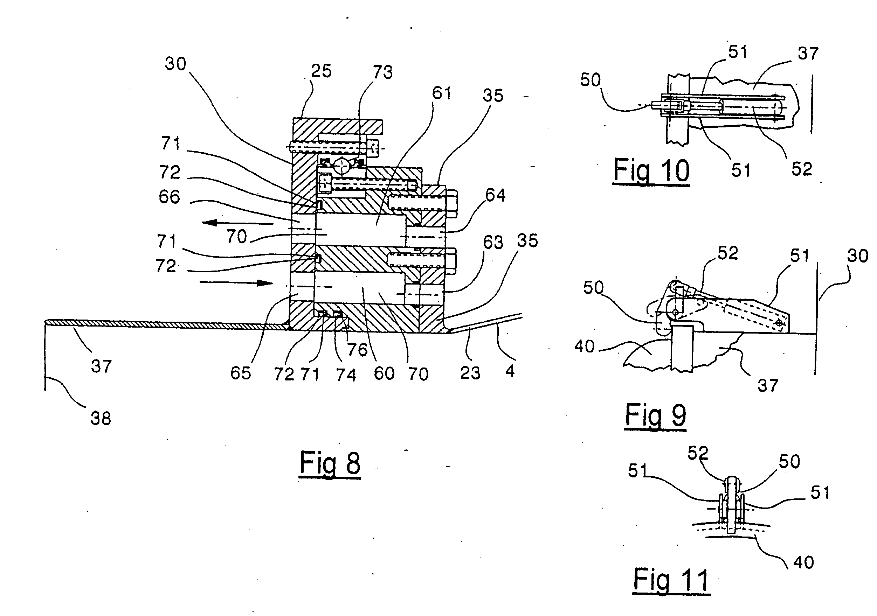

The stationary ring 30 and the rotatable ring 35 of the front end rotary bearing together form a pair of circumferentially extending galleries, namely, a flow gallery 60 and a return gallery 61 which are mutually sealed from each other, and which form a communicating means for accommodating heat exchange medium through the front end rotary bearing 25 to and from the passageways 55, see Figs. 3 and 8. The flow gallery 60 forms a manifold having a plurality of outlet ports 63 through the rotatable ring 35 for delivering heat exchange medium from the flow gallery 60 into the corresponding flow legs 56 of the passageways 55. The return gallery 61 forms a manifold having a plurality of inlet ports 64 through the rotatable ring 35 for accommodating return heat exchange medium from the corresponding return legs 57 of the passageways 55 to the return gallery 61. A main flow inlet 65 through the stationary ring 30 delivers heat exchange medium to the flow gallery 60, while a main return outlet 66 through the stationary ring 30 returns heat exchange medium from the return gallery 61. The main flow inlet 65 and the main return outlet 66 are connected to a heat exchange medium source (not shown) through main inlet and outlet ports 67 and 69, respectively, for providing heat exchange medium to the passageways 55 through the front end rotary bearing 25, see Fig. 5.

The flow and return galleries 60 and 61, respectively, are formed by corresponding recesses 70 which are formed into the rotatable ring 35. Three annular seals 71 located in grooves 72 in the rotatable ring 35 sealably engage the stationary ring 30 for mutually sealing the flow and return galleries 60 and 61 from each other. An axial thrust bearing 73 located between the stationary ring 30 and the rotatable ring 35 facilitates rotation of the rotatable ring 35 relative to the stationary ring 30. A pressure seal 74 carried in a groove 76 in the rotatable ring 35 sealably engage the stationary ring for forming a pressure seal in the front end rotary bearing 25, for in turn sealing the rotary joint between the communicating duct 37 and the vessel 4.

As mentioned above, the carrier framework 5 is slewable about the slew axis 9 at 3 between the loading position illustrated in broken lines in Fig. 1 with the carrier framework 5 inclined to the horizontal and the vessel 4 extending downwardly from the open mouth 38, through an operable position illustrated in full lines in Fig. 1 for processing the waste material in the vessel 4, and a discharge position which is not illustrated, but with the carrier framework 5 inclined to the horizontal, and the vessel 4 inclined downwardly towards the open mouth 38 for discharging treated material from the vessel 4. While the carrier framework 5 and the vessel 4 are not illustrated in the discharge position, the longitudinal central axis 6 of the vessel 4 is shown in the discharge position, and is indicated in the discharge position by the reference numeral and letter 6a in Fig. 1. When the vessel 4 is in the operable position the vessel 4, and in turn its central axis 6 lie horizontally.

A slewing means provided by a pair of hydraulic slewing rams 75 are operably connected to the carrier framework 5 and the support framework 7 on respective opposite sides thereof for slewing the carrier framework 5 and the vessel 4 between the loading position and the discharge position through the operable position. In this embodiment of the invention the slewing rams 75 are three-stage rams for providing sufficient angular movement of the carrier framework 5 between the loading and the discharge positions, and for retaining the carrier framework 5 in the loading, operable and discharge positions, respectively.

In use, with the main inlet and outlet ports 67 and 69, respectively, connected to an appropriate heat exchange medium source by flexible connecting tubes (not shown), the apparatus 1 is ready for use. The slewing rams 75 are operated for urging the carrier framework 5, and in turn the vessel 4 into the loading position. The actuating rams 52 are operated for urging the latches 50 into the unlatched state for unlatching the latches 50 from the closure lid 40, and the urging ram 47 is operated for pivoting the closure lid 40 from the closed to the open state. Waste material to be treated in the vessel 4 is then loaded through the open mouth 38 defined by the communicating duct 37 into the hollow interior region 8 of the vessel 4. The closure lid 40 is then closed by operating the urging ram 47 for urging the closure lid 40 into the closed state in sealable engagement with the communicating duct 37. The actuating rams 52 are operated for urging the latches 50 into the latched state for latching and retaining the lid 40 in the closed state in secure sealable engagement with the communicating duct 37. The slewing rams 75 are then operated for slewing the carrier framework 5, and in turn the vessel 4 into the operable position with the longitudinal central axis 6 of the vessel 4 extending horizontally as illustrated in full lines in Fig. 1. The drive motor 27 is operated for rotating the vessel 4 about the longitudinal central axis 6 for agitating the waste material therein. If desired the vessel 4 may be rotated by the drive motor 27 during loading thereof. Heat exchange medium is simultaneously passed through the passageways 55 for heating the hollow interior region 8 of the vessel 4.

The waste material is treated in the vessel 4 by any suitable waste treatment process while the vessel 4 is rotating. In general, however, it is envisaged that the heat exchange medium will be heated oil which will be heated to a relatively high temperature, sufficient for raising the temperature of the waste material in the hollow interior region 8 of the vessel 4 to a temperature greater than 120°C. However, this temperature will vary, and will depend on the waste material being treated, and could be as high as 500°C. In general, the waste material will include liquid as well as solid waste, and will have a relatively high content of water, and the heating of the waste material by the circulating heated oil through the passageways 55 while the vessel 4 is being rotated will cause the water to convert to steam, thus raising the pressure within the hollow interior region of the vessel to a relatively high predetermined pressure, which typically, will be in the order of 3 bar. The pressure is maintained at the predetermined pressure by the pressure relief valve (not shown) in the vent pipe 53. Additionally, if desired, steam may be injected into the hollow interior region 8 of the vessel 4, or electric radiant heat could be used for heating the waste material, while the vessel 4 is rotating during the waste treatment process. The steam would be injected into the hollow interior region 8 through an inlet in the communicating duct 37.

On completion of the treatment of the waste material in the vessel 4, the carrier framework 5, and in turn the vessel 4 are urged by the slewing rams 68 into the discharge position with the carrier framework 5 inclined relative to the horizontal, and the vessel 4 inclined downwardly towards the open mouth 38. The actuating rams 52 are operated for operating the latches 50 into the unlatched state for in turn releasing the closure lid 4. The urging ram 47 is operated for pivoting the closure lid 40 from the closed to the open state for in turn permitting discharge of the treated waste material from the vessel 4. The vessel 4 is continuously rotated while the carrier framework 5 is being slewed from the operable position to the discharge position and while the closure lid 40 is being pivoted from the closed to the open state, and also while the treated waste material is being discharged from the vessel 4.

When the treated waste has been discharged, with the closure lid 40 still in the open state, the carrier framework 5, and in turn the vessel 4 are pivoted into the loading position ready to receive the next load of waste material for processing.

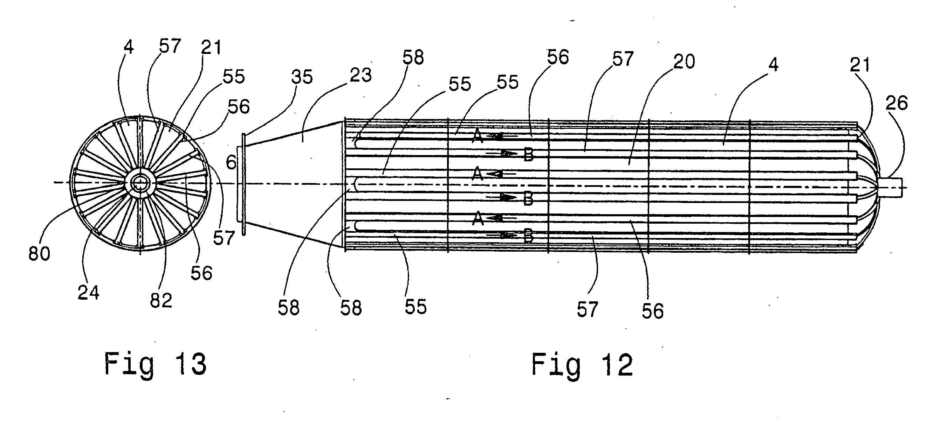

Referring now to Figs. 12 to 16, there is illustrated portions of apparatus also according to the invention for treating waste material. Only the portions of the apparatus are illustrated, the actual apparatus itself is not illustrated, however, this apparatus of Figs. 12 to 16 is substantially similar to the apparatus 1 of Figs. 1 to 11, and where appropriate, similar components are identified by the same reference numerals. The main difference between the apparatus of Figs. 12 to 16 and the apparatus 1 of Figs. 1 to 11 is in the arrangement of the heat exchange medium accommodating passageways 55, and the front and rear end rotary bearings 25 and 26. In this embodiment of the invention the passageways 55 are supplied with heat exchange medium through the rear end rotary bearing 26, instead of through the front end rotary bearing 25 as is the case with the apparatus 1 of Figs. 1 to 11. Additionally, the flow and return legs 56 and 57 extend from the rear end rotary bearing 26 over the convex end cap 21 and along the cylindrical portion 20 of the vessel 4, terminating at the end of the cylindrical portion 20 just prior to the frustoconical portion 23. Connecting legs 58 of each passageway 55 connect the corresponding flow and return legs 56 and 57, respectively, at the end of the cylindrical portion of the vessel 4 adjacent the frustoconical portion 23. The heat exchange medium is supplied to and returned from the passageways 55 through a communicating means formed in the rear end rotary bearing 26, as will now be described with reference to Fig. 15.

In this embodiment of the invention, the rear end rotary bearing 26, as well as comprising the self aligning axial thrust bearing 32 in the mounting ring flange 31, which is rigidly carried in the rear end frame 12, the rear end rotary bearing 26 also comprises a bearing assembly 79. The bearing assembly 79 comprises a stationary ring 80 of steel, which is rigidly secured to the carrier framework 5 by a pair of hollow spigots 102 and 103, which are rigidly secured to the stationary ring 80 by hollow mounting flanges 104 and 106. A rotabale member 82 also of steel, which is secured to the convex end cap 21 of the vessel 4 by welding, and extends coaxially and rearwardly therefrom is rotatably carried in the stationary ring 80 by a pair of spaced apart plain bearings 83.

An annular flow gallery 84 is formed between the rotatable member 82 and the stationary ring 80 by an annular recess extending around the rotatable member 82, and forms a manifold for distributing flow heat exchange medium to the flow legs 56 of the passageways 55. A plurality of communicating flow bores 85 extend through the rotatable member 82 from the flow gallery 84 to corresponding outlet ports 86 for delivering flow heat exchange medium from the flow gallery 84 to the flow legs 56 of the corresponding passageways 55.

An annular return gallery 88 formed between the rotatable member 82 and the stationary ring 80 by an annular recess in the rotatable member 82 forms a return manifold 88 for receiving return heat exchange medium from the passageways 55. A plurality of return bores 89 extend through the rotatable member 82 from corresponding inlet ports 90 to the return gallery 88 for receiving and returning return heat exchange medium from the return legs 57 of the corresponding passageways 55 to the return gallery 88.

In this embodiment of the invention a plurality of radially extending main inlets 91 extend at circumferentially spaced apart intervals through the stationary ring 80 for communicating with an annular flow chamber 92 extending around the stationary ring 80 for delivering flow heat exchange medium to the flow gallery 84. A main inlet port 93, which is formed by the hollow spigot 102 delivers flow heat exchange medium from a suitable heat exchange medium source (not shown) to the flow chamber 92 through the hollow mounting flange 104. A plurality of circumferentially spaced apart radially extending main outlets 95 extend radially through the stationary ring 80 at circumferentially spaced apart intervals for communicating the return gallery 88 with an annular return chamber 96 extending around the stationary ring 80 for returning return heat exchange medium from the return gallery 88 to the return chamber 86. A main outlet port 97, which is formed by the hollow spigot 103 returns the return heat exchange medium to the heat exchange medium source (not shown) from the return chamber 96 through the hollow mounting flange 106. Flexible tubes (not shown) couple the main inlet and outlet ports 93 and 97, respectively, to the heat exchange source.

Annular seals 98 in annular grooves 99 extending around the rotatable member 82 rotatably and sealably engage the stationary ring 80 for mutually sealing the flow and return galleries 84 and 88, respectively, from each other.

In this embodiment of the invention the drive transmission shaft 24 is secured by screws 100 to the rotatable member 82 of the bearing assembly 79, and extends coaxially therefrom and is coupled by a coupling unit 101 to the drive motor 27. The self-aligning axial thrust bearing 32, which is located in the mounting ring flange 31 rotatably carries the drive transmission shaft 24 through the rear end frame 12.

A closure plate 105 of steel sealably secured to the rotatable member 82 within the hollow interior region 8 of the vessel 4 closes off the flow and return bores 85 and 89, which extend through the rotatable member 82.

Heat insulating cladding 123 is provided over the entire exterior of the vessel 4, and also over the passageways 55 for minimising heat loss from the container.

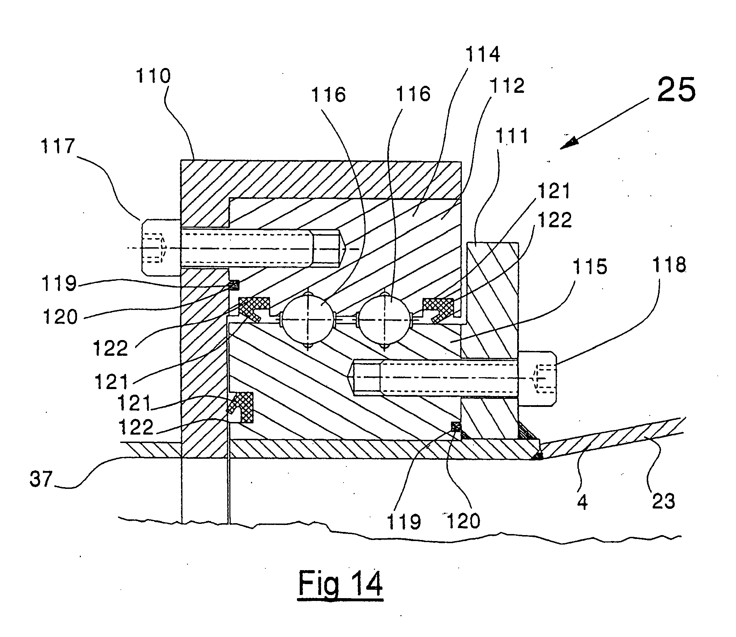

Referring now to Fig. 14, the front end rotary bearing 25 for rotatably mounting the vessel 4 at the front end of the carrier framework 5 relative to the communicating duct 37 for this apparatus of Figs. 12 to 16 will now be described. The front end rotary bearing 25 in this case comprises a stationary ring 110 which is rigidly secured to the carrier framework 5 by spigots (not shown) similar to the spigots 33 of the front end bearing 25 of the apparatus 1 of Figs. 1 to 11. A rotatable member, in this embodiment of the invention a rotatable ring 111, which is welded to and extends around the vessel 4 adjacent the end of the frustoconical portion 23 is rotatably coupled to the stationary ring 110 by a ball race 112. An axial thrust bearing 112 comprises an outer ring 114 and an inner ring 115 having two circumferentially extending rows of ball bearings 116 extending between the outer and inner rings 114 and 115. The outer ring 114 is secured by screws 117 circumferentially spaced apart around the stationary ring 110, and the inner ring 115 is secured to the rotatable ring 111 by screws 118 circumferentially spaced apart around the rotatable ring 111. O-ring seals 119 in corresponding annular grooves 120 in the outer and inner rings 114 and 115 form a seal between the outer and inner rings 114 and 115 and the corresponding stationary and rotatable rings 110 and 111, respectively. Pressure seals 121 located in annular grooves 122 in the outer and inner rings 114 and 115 of the ball race 112 form a pressure seal between the rotatable ring 111 and the stationary ring 110 for providing a pressure seal between the hollow interior region 8 of the vessel 4 and the communicating duct 37.

The communicating duct 37 extends forwardly from the stationary ring 110, and terminates at its free end (not shown) in an open mouth (not shown) for defining an open mouth to the hollow interior region 8 of the vessel 4. The open mouth (not shown) defined by the communicating duct 37 is closed by a closure lid similar to the closure lid 40 of the apparatus 1 of Figs. 1 to 11. The mounting of the closure lid of the apparatus of this embodiment of the invention to the communicating duct 37 is similar to that of the apparatus 1 of Figs. 1 to 11, and a plurality of latches similar to the latches 50 of the apparatus 1 of Figs. 1 to 11 are provided for securing the closure lid in the closed state.

Otherwise the apparatus of Figs. 12 to 16 is similar to the apparatus 1 described with reference to Figs. 1 to 11 and its operation is likewise similar.

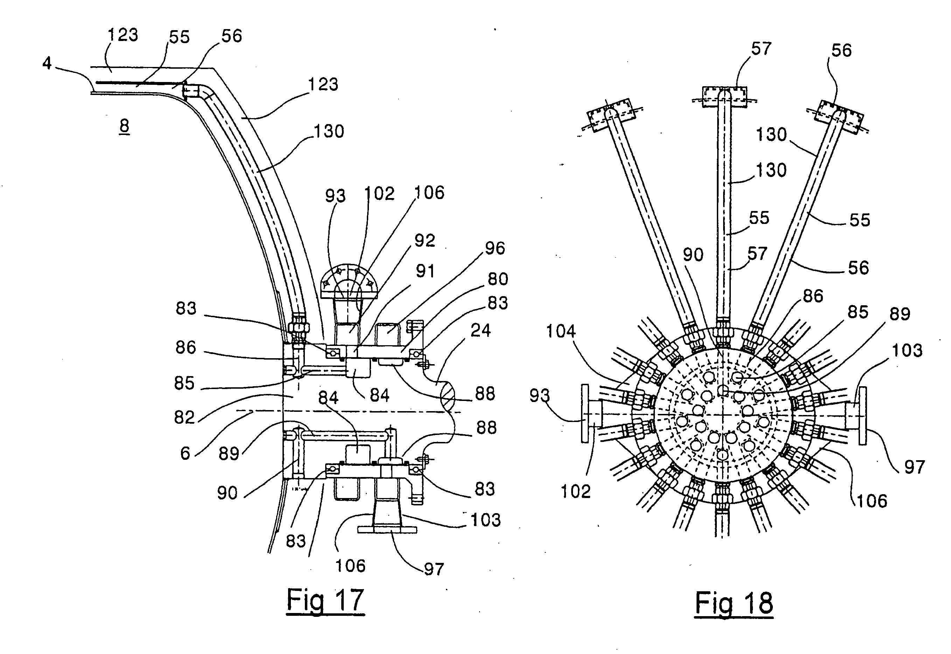

Referring now to Figs. 17 and 18, there is illustrated a portion of apparatus according to another embodiment of the invention also for treating waste material. This apparatus of Figs. 17 and 18 is substantially similar to the apparatus of Figs. 1 to 11, and where appropriate, similar components are identified by the same reference numerals. However, this apparatus of Figs. 17 and 18 is more similar to the apparatus described with reference to Figs. 12 to 16, and for convenience will be described with reference to the description already given to the apparatus of Figs. 12 to 16. In this embodiment of the invention the heat exchange medium accommodating passageways 55 are substantially similar to the heat exchange medium accommodating passageways 55 of the apparatus of Figs. 12 to 14 and the heat exchange medium is supplied to the passageways 55 through the rear end rotary bearing 26, which is also substantially similar to the rear end rotary bearing 26 described with reference to the apparatus of Figs. 12 to 16. The main difference between this apparatus of Figs. 17 and 18 and the apparatus of Figs. 12 to 16 is that instead of the return and flow legs 56 and 57 of the passageways 55 where they extend over the convex end cap 21 being formed by channel members welded to the end cap 21 are instead formed by tubes 130 which extend from the outlet and inlet ports 86 and 90, respectively, formed in the rotatable member 82 to the corresponding flow and return legs 56 and 57 of the passageways 55 adjacent the end of the cylindrical portion 20 where the cylindrical portion 20 terminates at the end cap 21. The flow and return legs 56 and 57 of the passageways 55 extending along the cylindrical portion 20 of the vessel 4 are similar to the flow and return legs 56 and 57 of the passageways 55 of the apparatus described with reference to Figs. 12 to 16. Otherwise, the apparatus of Figs. 17 and 18 is similar to the apparatus of Figs. 12 to 16 and Figs. 1 to 11, and its operation is likewise similar.

While the rams for operating the closure lid and the latches for latching the closure lid, and the rams for slewing the carrier framework between the loading and discharge positions have been described as being hydraulic rams, the rams may be pneumatic, or any other type of rams. Additionally, instead of the rams, other suitable linear drive means may be provided, for example, screw drives, linear motors, winches, which may be electrically or otherwise powered may be used. Additionally, while the rams for slewing the carrier framework between the loading and the discharge positions have been described as three-stage rams, the rams for slewing the carrier framework may be provided with any number of stages, from one upwards.

While the heat exchange medium accommodating passageways have been described as being elongated passages formed by U-shaped channels welded to the vessel skin, any other heat exchange medium accommodating passageways may be provided. Indeed, in certain cases, it is envisaged that the vessel may be provided in the form of a double skin vessel using dimple plate material, or indeed any other suitable double plate construction, and the passageway or passageways may be formed between the skins of the double skin vessel.

It will be appreciated that while specific temperatures and pressures have been described in connection with the apparatus, any other suitable and desired temperatures and pressures may be used. For example, it is envisaged that the waste material may be heated to any other suitable temperature besides that described, and the pressure within the vessel may be raised to any other suitable predetermined pressure besides that described during the treatment of the material. Indeed, it is also envisaged that a chilling heat exchange medium may be used instead of a heating heat exchange medium, and where the heat exchange medium is for heating the contents of the vessel, the heat exchange medium may be other than oil, for example, water, super-heated steam, or the like.

It is also envisaged that instead of mounting the vessel in the carrier framework with only one of the rotary bearings forming the communicating means for supplying the heat exchange medium to the heat exchange medium accommodating passageways, in certain cases, a pair of rotary bearings may be provided each with communicating means, one of the rotary bearings being provided at one end of the carrier framework and the other being provided at the other end of the carrier framework, and the heat exchange medium would be supplied to the passageways at one end of the vessel through the communicating means of one of the rotary bearings, and would be returned from the passageways through the communicating means of the other rotary bearing at the other end of the carrier framework.

Needless to say, while the heat exchange medium accommodating passageways have each been described as comprising a flow leg and a return leg which extend longitudinally along the vessel, the passageways may be provided of any other shape or construction. For example, the heat exchange medium accommodating passageways may extend helically around the vessel. It will also be appreciated that the heat exchange medium accommodating passageways may be located on the inner surface of the vessel as well as or instead of on the outer surface thereof. Furthermore, it is envisaged that the heat exchange medium accommodating passageways may actually extend into the hollow interior region of the vessel.

It is also envisaged that the vessel may be provided as a double skinned vessel, and the heat exchange medium accommodating passageways would be formed between the two skins of the vessel.

It is also envisaged that where it is desired to inject steam into the hollow interior region of the vessel during treatment of the waste material, an additional inlet port would be provided to the vessel through the communicating duct, or the steam may be injected through the vent outlet.

While the vessel, carrier framework, support framework and other components of the apparatus according to the invention have been described as being of steel, the materials of the vessel, frameworks and other components may be any suitable materials. Indeed, in certain cases, depending on the waste material being processed, the vessel may be of stainless steel or other suitable corrosion resistant material.

## Claims

1. Apparatus for treating waste material, the apparatus comprising a carrier framework (5), an elongated vessel (4) defining a hollow interior region (8) for the waste material, the vessel (4) defining a longitudinally extending vessel axis (6), and being rotatably carried in the carrier framework (5) about the vessel axis (6), an open mouth (38) being provided to the hollow interior region (8) of the vessel (4) for accommodating waste material to and from the hollow interior region (8), and a closure means (40) for closing the open mouth (38), the closure means (40) being operable between a closed state closing the open mouth (38), and an open state providing access to the hollow interior region (8) through the open mouth (38) for loading and discharging waste material to and from the hollow interior region (8), **characterised in that** a communicating duct (37) in continuous communication with the hollow interior region (8) defines the open mouth (38) to the hollow interior region (8), the communicating duct (37) being rigidly coupled to the carrier framework (5), and sealably engaging the vessel (4) for facilitating rotation of the vessel (4) relative to the communicating duct (37), the closure means (40) is coupled to the carrier framework (5) and is pivotal relative to the carrier framework (5) about a pivot axis (42), and an urging means (47) is provided for urging the closure means (40) between the open state and the closed state.

2. Apparatus as claimed in Claim 1 **characterised in that** the communicating duct (37) defines a longitudinally extending duct axis, which coincides with the longitudinal vessel axis (6).

3. Apparatus as claimed in Claim 1 or 2 **characterised in that** the longitudinal vessel axis (6) about which the vessel (4) is rotatable is the longitudinal geometrical central axis of the vessel (4).

4. Apparatus as claimed in any preceding claim **characterised in that** the pivot axis (42) about which the closure means (40) is pivotal between the closed state and the open state extends transversely relative to the longitudinal vessel axis (6).

5. Apparatus as claimed in any preceding claim **characterised in that** the vessel (4) is rotatably carried in the carrier framework (5) on a pair of spaced apart rotary bearings (25,26), each rotary bearing (25,26) comprising a stationary ring (30,31) which is rigidly coupled to the carrier framework (5), and a rotatable member (35) rigidly coupled to the vessel (4) and rotatable therewith relative to the stationary ring (30,31), a heat exchange medium accommodating passageway (55,56,57,58) is associated with the vessel (4) for controlling the temperature of the hollow interior region (8) thereof, and a communicating means (60,61,63,64,84,85,86,88,89,90) extending through at least one of the rotary bearings (25,26) communicates the heat exchange medium accommodating passageway (55,56,57,58) with a heat exchange medium source for providing heat exchange medium to the heat exchange medium accommodating passageway (55,56,57,58).

6. Apparatus as claimed in Claim 5 **characterised in that** the communicating duct (37) extends from the stationary ring (30) of one of the rotary bearings (25), and the rotary bearing (25) through which the communicating means (60,61,62,63) extends for accommodating the heat exchange medium to each heat exchange medium accommodating passageway (55,56,57,58) is the rotary bearing (25) from which the communicating duct (37) extends.

7. Apparatus as claimed in any preceding claim **characterised in that** the closure means (40) comprises a closure lid (40), and a securing means (50) is provided for securing the closure means (40) to the communicating duct (37) for retaining the closure means (40) in the closed state.

8. Apparatus as claimed in Claim 7 **characterised in that** the securing means (50) comprises a plurality of spaced apart latches (50) co-operating between the communicating duct (37) and the closure means (40) for securing the closure means (40) in the closed state, each latch (50) being operable between a latched state securing the closure means (40) in the closed state and an unlatched state for permitting pivoting of the closure means (40) from the closed state to the open state, and an actuating means (52) is provided for urging the latches (50) between the latched and the unlatched states.

9. Apparatus as claimed in any preceding claim **characterised in that** the closure means (40) is pivotally coupled to the framework (5) by a pivot shaft (45) which defines the pivot axis (42) about which the closure means (40) is pivotal, the pivot shaft (42) being rotatably carried on a pivot mounting bracket (44) extending from the communicating duct (37), and a carrier bracket (46) extending from the pivot shaft (45) carrying the closure means (40).

10. Apparatus as claimed in any preceding claim **characterised in that** the urging means (47) for urging the closure means (40) between the closed and the open states comprises an urging ram (47) operably coupled between the closure means (40) and the carrier framework (5).

11. Apparatus as claimed in any preceding claim **characterised in that** a ground engaging support means (7) is provided for pivotally supporting the carrier framework (5) about a substantially horizontal slew axis (9) extending transversely relative to the longitudinal vessel axis (6), the carrier framework (5) and the vessel (4) being slewable about the slew axis (9) between a loading position and a discharge position, and through an operable position intermediate the loading and the discharge positions.

12. Apparatus as claimed in any preceding claim **characterised in that** a drive means (27) is provided for rotating the vessel (4) about the longitudinally extending central axis (6) within the carrier framework (5) for agitating the waste material located in the hollow interior region (8) of the vessel (4).

## Patentansprüche

1. Vorrichtung zur Behandlung von Abfallmaterial, umfassend einen Tragrahmen (5), einen länglichen Behälter (4), der einen hohlen Innenbereich (8) für das Abfallmaterial sowie eine sich in Längsrichtung erstreckende Behälterachse (6) definiert und der um die Behälterachse (6) drehbar in dem Tragrahmen (5) gehaltert ist, eine freie Öffnung (38), die an dem hohlen Innenbereich (8) des Behälters (4) vorgesehen ist, um Abfallmaterial in den und aus dem hohlen Innenbereich (8) zu bringen, und eine Verschließeinrichtung (40) zum Verschließen der freien Öffnung (38), wobei die Verschließeinrichtung (40) zwischen einem die freie Öffnung (38) verschließenden Schließzustand und einem geöffneten Zustand betätigbar ist, der durch die freie Öffnung (38) einen Zugang zu dem hohlen Innenbereich (8) bietet, um Abfallmaterial in den hohlen Innenbereich (8) zu laden und aus diesem abzugeben,
**dadurch gekennzeichnet, dass** ein kommunizierender Kanal (37) in ständiger Verbindung mit dem hohlen Innenbereich (8) die freie Öffnung (38) in den hohlen Innenbereich (8) festlegt, wobei der kommunizierende Kanal (37) starr mit dem Tragrahmen (5) gekoppelt ist und an dem Behälter (4) abdichtend angreift, um ein Drehen des Behälters (4) relativ zu dem kommunizierenden Kanal (37) zu ermöglichen, wobei die Verschließeinrichtung (40) an den Tragrahmen (5) gekoppelt sowie relativ zum Tragrahmen (5) um eine Schwenkachse (42) verschwenkbar ist und ein Antriebsmittel (47) zum Antreiben der Verschließeinrichtung (40) zwischen dem geöffneten Zustand und dem Schließzustand vorgesehen ist.

2. Vorrichtung nach Anspruch 1, **dadurch gekennzeichnet, dass** der kommunizierende Kanal (37) eine sich in Längsrichtung erstreckende Kanalachse definiert, die mit der Behälterlängsachse (6) zusammenfällt.

3. Vorrichtung nach Anspruch 1 oder 2, **dadurch gekennzeichnet, dass** die Behälterlängsachse (6), um die der Behälter (4) drehbar ist, die geometrische Mittellängsachse des Behälters (4) ist.

4. Vorrichtung nach irgendeinem vorhergehenden Anspruch, **dadurch gekennzeichnet, dass** die Schwenkachse (42), um die die Verschließeinrichtung (40) zwischen dem Schließzustand und dem geöffneten Zustand verschwenkbar ist, sich bezüglich der Behälterlängsachse (6) quer erstreckt.

5. Vorrichtung nach irgendeinem vorhergehenden Anspruch, **dadurch gekennzeichnet, dass** der Behälter (4) in dem Tragrahmen (5) von einem Paar beabstandeter Drehlager (25, 26) drehbar gelagert ist, wobei jedes Drehlager (25, 26) einen starr mit dem Tragrahmen (5) gekoppelten, feststehenden Ring (30, 31) und ein Drehglied (35) umfasst, das starr mit dem Behälter (4) gekoppelt und mit diesem relativ zu dem feststehenden Ring (30, 31) drehbar ist, dass ein ein Wärmeaustauschmedium aufnehmender Durchgang (55, 56, 57, 58) mit dem Behälter (4) in Verbindung steht, um die Temperatur seines hohlen Innenbereichs (8) zu steuern, und dass eine sich zumindest durch eines der Drehlager (25, 26) erstreckende Verbindungseinrichtung (60, 61, 63, 64, 84, 85, 86, 88, 89, 90) den das Wärmeaustauschmedium aufnehmenden Durchgang (55, 56, 57, 58) mit einer Wärmeaustauschmediumquelle in Verbindung bringt, um den das Wärmeaustauschmedium aufnehmenden Durchgang (55, 56, 57, 58) mit Wärmeaustauschmedium zu versorgen.

6. Vorrichtung nach Anspruch 5, **dadurch gekennzeichnet, dass** sich der kommunizierende Kanal (37) von dem feststehenden Ring (30) eines der Drehlager (25) erstreckt und das Drehlager (25), durch welches sich die Verbindungseinrichtung (60, 61, 62, 63) erstreckt, um das Wärmeaustauschmedium in jeden das Wärmeaustauschmedium aufnehmenden Durchgang (55, 56, 57, 58) zu bringen, das Drehlager (25) ist, von dem aus sich der kommunizierende Kanal (37) erstreckt.

7. Vorrichtung nach irgendeinem vorhergehenden Anspruch, **dadurch gekennzeichnet, dass** die Verschließeinrichtung (40) einen Verschließdeckel (40) aufweist und eine Sicherungseinrichtung (50) vorgesehen ist, um die Verschließeinrichtung (40) zum Halten der Verschließeinrichtung (40) in dem Schließzustand an dem kommunizierenden Kanal (37) zu befestigen.

8. Vorrichtung nach Anspruch 7, **dadurch gekennzeichnet, dass** die Sicherungseinrichtung (50) mehrere voneinander beabstandete Riegel (50) umfasst, die zwischen dem kommunizierenden Kanal (37) und der Verschließeinrichtung (40) zusammenwirken, um die Verschließeinrichtung (40) in dem Schließzustand zu sichern, wobei jeder Riegel (50) zwischen einem die Verschließeinrichtung (40) in dem Schließzustand sichernden Verriegelungszustand und einem unverriegelten Zustand betätigbar ist, um ein Verschwenken der Verschließeinrichtung (40) aus dem Verriegelungszustand in den geöffneten Zustand zu gestatten, und wobei eine Betätigungseinrichtung (52) zum Antreiben der Riegel (50) zwischen dem Verriegelungszustand und dem unverriegelten Zustand vorhanden ist.

9. Vorrichtung nach irgendeinem vorhergehenden Anspruch, **dadurch gekennzeichnet, dass** die Verschließeinrichtung (40) mittels eines Schwenkschafts (45), der die Schwenkachse (42) definiert, um die die Verschließeinrichtung (40) verschwenkbar ist, verschwenkbar an den Rahmen (5) gekoppelt ist, wobei der Schwenkschaft (42) an einer Schwenkhalterung (44) drehbar gelagert ist, die sich von dem kommunizierenden Kanal (37) erstreckt, und wobei sich ein Tragbügel (46) von dem die Verschließeinrichtung (40) lagernden Schwenkschaft (45) erstreckt.

10. Vorrichtung nach irgendeinem vorhergehenden Anspruch, **dadurch gekennzeichnet, dass** das Antriebsmittel (47) zum Antreiben der Verschließeinrichtung (40) zwischen dem Schließzustand und dem geöffneten Zustand einen Antriebsstößel (47) umfasst, der betriebsfähig zwischen der Verschließeinrichtung (40) und dem Tragrahmen (5) angeordnet ist.

11. Vorrichtung nach irgendeinem vorhergehenden Anspruch, **dadurch gekennzeichnet, dass** eine am Boden angreifende Stützeinrichtung (7) zum verschwenkbaren Stützen des Tragrahmens (5) um eine im Wesentlichen horizontale Schwenkachse (9) vorgesehen ist, die sich bezüglich der Behälterlängsachse (6) quer erstreckt, wobei der Tragrahmen (5) und der Behälter (4) um die Schwenkachse (9) zwischen einer Ladeposition und einer Abgabeposition sowie durch eine Betriebsposition zwischen der Lade- und der Abgabeposition verschwenkbar sind.

12. Vorrichtung nach irgendeinem vorhergehenden Anspruch, **dadurch gekennzeichnet, dass** ein Antriebsmittel (27) zum Drehen des Behälters (4) um die sich in Längsrichtung erstreckende Mittelachse (6) Innerhalb des Tragrahmens (5) vorhanden ist, um das sich in dem hohlen Innenbereich (8) des Behälters (4) befindende Abfallmaterial zu mischen.

## Revendications

1. Appareil de traitement de déchets, l'appareil comprenant un châssis porteur (5), un récipient allongé (4) définissant une région intérieure creuse (8) pour les déchets, le récipient (4) définissant un axe (6) de récipient s'étendant longitudinalement, et étant porté en rotation dans le châssis porteur (5) autour de l'axe (6) du récipient, un bec ouvert (38) étant pourvu à la région intérieure creuse (8) du récipient (4) pour alimenter des déchets à la région intérieure creuse (8) et recevoir des déchets à partir de celle-ci, et un moyen de fermeture (40) pour fermer le bec ouvert (38), le moyen de fermeture (40) pouvant fonctionner entre un état fermé consistant à fermer le bec ouvert (38), et un état ouvert permettant l'accès à la région intérieure creuse (8) à travers le bec ouvert (38) pour charger des déchets dans la région intérieure creuse (8) et décharger des déchets à partir de celle-ci, **caractérisé en ce qu'**un conduit de communication (37) communiquant en continu avec la région intérieure creuse (8) définit le bec ouvert (38) à la région intérieure creuse (8), le conduit de communication (37) étant couplé de façon rigide au châssis porteur (5), et s'engageant de manière étanche avec le récipient (4) pour faciliter la rotation du récipient (4) par rapport au conduit de communication (37), le moyen de fermeture (40) est couplé au châssis porteur (5) et pivote par rapport au châssis porteur (5) autour d'un axe de pivotement (42), et un moyen de sollicitation (47) est prévu pour solliciter le moyen de fermeture (40) entre l'état ouvert et l'état fermé.

2. Appareil tel que revendiqué dans la revendication 1 **caractérisé en ce que** le conduit de communication (37) définit un axe de conduit s'étendant longitudinalement, qui coïncide avec l'axe longitudinal (6) du récipient.

3. Appareil tel que revendiqué dans la revendication 1 ou 2 **caractérisé en ce que** l'axe longitudinal (6) du récipient autour duquel le récipient (4) peut tourner est l'axe central géométrique longitudinal du récipient (4)

4. Appareil tel que revendiqué dans l'une des revendications précédentes, **caractérisé en ce que** l'axe de pivotement (42) autour duquel le moyen de fermeture (40) pivote entre l'état fermé et l'état ouvert s'étend transversalement par rapport à l'axe longitudinal (6) du récipient.

5. Appareil tel que revendiqué dans l'une des revendications précédentes, **caractérisé en ce que** le récipient (4) est porté en rotation dans le châssis porteur (5) sur une paire de paliers rotatifs (25, 26) espacés, chaque palier rotatif (25, 26) comprenant une bague fixe (30, 31) qui est couplée de façon rigide au châssis porteur (5), et un élément rotatif (35) couplé de façon rigide au récipient (4) et pouvant tourner avec ce dernier par rapport à la bague fixe (30, 31), un passage de réception (55, 56, 57, 58) d'un milieu d'échange thermique est associé au récipient (4) pour réguler la température de sa région intérieure creuse (8), et un moyen de communication (60, 61, 63, 64, 84, 85, 86, 88, 89, 90) s'étendant à travers au moins l'un des paliers rotatifs (25, 26) établit une communication entre le passage de réception (55, 56, 57, 58) d'un milieu d'échange thermique et une source de milieu d'échange thermique pour alimenter un milieu d'échange thermique au passage de réception (55, 56, 57, 58) du milieu d'échange thermique.

6. Appareil tel que revendiqué dans la revendication 5 **caractérisé en ce que** le conduit de communication (37) s'étend de la bague fixe (30) de l' un des paliers rotatifs (25), et le palier rotatif (25) à travers lequel le moyen de communication (60, 61, 62, 63) s'étend pour recevoir le milieu d'échange thermique à chaque passage de réception (55, 56, 57, 58) du milieu d'échange thermique est le palier rotatif (25) à partir duquel le conduit de communication (37) s'étend.

7. Appareil tel que revendiqué dans l'une des revendications précédentes **caractérisé en ce que** le moyen de fermeture (40) comprend un couvercle de fermeture (40), et un moyen de fixation (50) est prévu pour fixer le moyen de fermeture (40) au conduit de communication (37) pour maintenir le moyen de fermeture (40) dans l'état fermé.

8. Appareil tel que revendiqué dans la revendication 7 **caractérisé en ce que** le moyen de fixation (50) comprend une pluralité de verrous (50) espacés coopérant entre le conduit de communication (37) et le moyen de fermeture (40) pour maintenir le moyen de fermeture (40) dans l'état fermé, chaque verrou (50) pouvant fonctionner entre un état verrouillé consistant à maintenir le moyen de fermeture (40) dans l'état fermé et un état non verrouillé permettant le pivotement du moyen de fermeture (40) de l'état fermé à l'état ouvert, et un moyen d'actionnement (52) est prévu pour solliciter les verrous (50) entre les états verrouillé et déverrouillé.

9. Appareil tel que revendiqué dans l'une des revendications précédentes **caractérisé en ce que** le moyen de fermeture (40) est couplé en pivotement au châssis (5) par un arbre pivotant (45) qui définit l'axe de pivotement (42) autour duquel le moyen de fermeture (40) pivote, l'arbre pivotant (42) étant porté en rotation sur une patte de fixation pivotante (44) s'étendant du conduit de communication (37), et une patte de support (46) s'étendant de l'arbre pivotant (45) portant le moyen de fermeture (40).

10. Appareil tel que revendiqué dans l'une des revendications précédentes **caractérisé en ce que** le moyen de sollicitation (47) destiné à solliciter le moyen de fermeture (40) entre les états ouvert et fermé comprend un bras de sollicitation (47) couplé de manière fonctionnelle entre le moyen de fermeture (40) et le châssis porteur (5).

11. Appareil tel que revendiqué dans l'une des revendications précédentes **caractérisé en ce qu'**un moyen de support (7) par contact avec le sol est prévu pour supporter en pivotement le châssis porteur (5) autour d'un axe d'oscillation (9) essentiellement horizontal s'étendant transversalement par rapport à l'axe longitudinal (6) du récipient, la structure de support (5) et le récipient (4) pouvant osciller autour de l'axe de d'oscillation (9) entre une position de charge et une position de décharge, et à travers une position de fonctionnement entre les positions de charge et de décharge.

12. Appareil tel que revendiqué dans l'une des revendications précédentes **caractérisé en ce qu'**un moyen d'entraînement (27) est prévu pour faire tourner le récipient (4) autour de l'axe central (6) s'étendant longitudinalement à l'intérieur du châssis porteur (5) pour agiter les déchets situés dans la région intérieure creuse (8) du récipient (4).
